# EUROPÄISCHE PATENTSCHRIFT

(11) **EP 2 504 294 B1**
(45) Veröffentlichungstag und Bekanntmachung des Hinweises auf die Patenterteilung: **14.08.2019**
(21) Anmeldenummer: 10788015.5
(22) Anmeldetag: 26.11.2010
(51) Int. Cl.: C04B 26/02, C08K 3/00, C04B 111/28, C04B 103/63

(54) **BRANDHEMMENDER FORMKÖRPER UND VERFAHREN ZUR HERSTELLUNG SOWIE VERWENDUNG EINES SOLCHEN**
FIRE RETARDANT MOLDINGS AND METHOD FOR PRODUCING AND USING SUCH A MOLDING
CORPS MOULÉ IGNIFUGE ET PROCÉDÉ DE FABRICATION AINSI QU'UTILISATION DE CELUI-CI

(30) Priorität: 12.03.2010 DE 102010011228
(43) Veröffentlichungstag der Anmeldung: 03.10.2012
(73) Patentinhaber: Akusta Unternehmensberatung, 69168 Wiesloch (DE)
(72) Erfinder: STADTER, Uwe, 69168 Wiesloch (DE)
(74) Vertreter: Kesselhut, Wolf
(86) Internationale Anmeldenummer: PCT/EP2010/007172
(87) Internationale Veröffentlichungsnummer: WO 2011/063967

(56) Entgegenhaltungen:
- EP-A2- 0 370 517
- WO-A1-01/51554
- GB-A- 2 278 605
- JP-A- 7 187 744
- JP-A- 2001 064 526
- JP-A- 2008 063 577
- MIYATA S ET AL: "FIRE-RETARDING POLYPROPYLENE WITH MAGNESIUM HYDROXIDE", JOURNAL OF APPLIED POLYMER SCIENCE, JOHN WILEY AND SONS INC. NEW YORK, US, Bd. 25, 1. Januar 1980 (1980-01-01), Seiten 416-419, XP002945792, ISSN: 0021-8995, DOI: DOI:10.1002/APP.1980.070250308

## Beschreibung

Die Erfindung betrifft einen brandhemmenden Formkörper und ein Verfahren zur Herstellung sowie die Verwendung eines solchen gemäß dem Oberbegriff von Anspruch 1, 5 und 12.

Verbreitet werden Brandschutzmittel oder brandverhütende Substanzen in Form einer flüssigen oder pastösen Mischung aus Aluminiumhydroxid bzw. Magnesiumhydroxid und einem granulierten Kunststoffmaterial auf Gegenstände aufgebracht, die zwar gute Flammen hemmende Eigenschaften besitzen, jedoch - abgesehen von der vergleichsweise aufwändigen Verarbeitung - nur eine geringe mechanische Festigkeit aufweisen und zudem eine längere Trocknungszeit des Materials erfordern.

Aus der EP 1 530 553 B1 ist ein Isolierbauteil zur Wärmeisolation in Kraftfahrzeugen bekannt, welches eine feuerhemmende Beschichtung besitzt, die zu 40 bis 90 Gew.-% aus einem keramischen Klebstoff auf Basis einer Wasserglas-Lösung besteht, dem 5 bis 30 Gew.- % eines thermoplastischen Pulverklebers und bis zu 10 Gew.-% eines unter Wärmeeinwirkung expandierbaren Treibmittels aus Polymerkunststoffpartikeln beigesetzt sind, welch letztere eine gasdichte Hülle aufweisen, in der gasförmiger Kohlenwasserstoff eingekapselt ist. Obgleich der Beschichtung weiterhin bis zu 20 Gew.-% Aluminium-Hydroxid beigesetzt sein können, gibt die Schrift keinen Hinweis darauf, dieses in eine durch Zufuhr von Wärme aufgeschmolzene thermoplastische Kunststoffmasse einzumischen, die nach dem Vermischen direkt als Formkörper ausgetragen oder nach dem Abkühlen zu einem Granulat verarbeitet werden kann, welches in einer Kunststoffspritzgussmaschine zu einem selbständig nutzbaren formstabilen Formkörper verarbeitbar ist. Demnach handelt es sich bei dem beschriebenen Werkstoff lediglich um ein Beschichtungsmaterial, das direkt auf ein zu schützendes Bauteil aufgebracht wird, und nach dem Aushärten des Klebstoffs auf diesem haftet. Durch den hohen Anteil an enthaltenem keramischen Klebstoff besitzt das beschriebene Material lediglich die Eigenschaften eines Beschichtungsmaterials, welches sich aufgrund der mangelnden Formstabilität nicht zu einem Formkörper formen lässt, der eigenständig ohne ein mit diesem verbundenes Werkstück verarbeitet werden kann. Die durch den Klebstoff bestimmten Materialeigenschaften des Beschichtungsmaterials nach der EP 1 530 553 B1 sind demnach mit den bekannten vorteilhaften Eigenschaften eines thermoplastischen Kunststoffmaterials nicht vergleichbar.

Die WO 01/51554 offenbart eine brandhemmende Masse aus einem Kunststoff und einem Flammschutzmittel, welches Magnesiumhydroxid oder Aluminiumhydroxid sein kann. Dabei kann als Kunststoff u.a. eine Mischung aus Polypropylen und Ethylenvinylacetat ausgewählt werden. Der Lehre dieser Schrift ist aber nicht zu entnehmen, in einem brandhemmenden Formkörper neben der thermoplastischen Kunststoffmasse und dem anorganischen Flammschutzmittel zusätzlich noch synthetische Mineralöle einzusetzen. Darüber hinaus liegen die durchschnittlichen Korngrößen von Magnesiumhydroxid oder Aluminiumhydroxid nach der Lehre der WO 01/51554 unterhalb der unteren Grenze für anorganische Flammschutzmittel, welche für den erfindungsgemäßen brandhemmenden Formkörper verwendet werden sollen. Demgemäß ist es eine Aufgabe der vorliegenden Erfindung, einen Flammen hemmenden Werkstoff in Form eines Formkörpers zu schaffen, der im Wesentlichen dieselben mechanischen Eigenschaften wie thermoplastischer Kunststoff besitzt und dazu in der Lage ist, offene Brände einzudämmen und/oder deren Ausbreitung zu verhindern.

Diese Aufgabe wird erfindungsgemäß durch einen brandhemmenden Formkörper mit den Merkmalen von Anspruch 1 gelöst. Eine weitere Aufgabe der Erfindung besteht darin, ein Verfahren zur Herstellung eines solchen Formkörpers sowie weitere Verwendungen eines solchen Formkörpers bereitzustellen.

Diese Aufgabe wird erfindungsgemäß durch die Merkmale von Anspruch 5 und 12 gelöst.

Vorteilhafte Weiterbildungen der Erfindung sind in den abhängigen Ansprüchen charakterisiert.

Ein erfindungsgemäßer brandhemmender Formkörper, insbesondere ein Flachkörper oder eine Folie, mit einer Dicke von bevorzugt mehr als 0,5mm weist eine thermoplastische Kunststoffmasse und ein mit der thermoplastischen Kunststoffmasse vermischtes anorganisches Flammschutzmittel in Form von Aluminiumhydroxid oder Magnesiumhydroxid auf, das durch Abspaltung von Wasser wirkt und mit einem Anteil im Intervall von 20 Gewichts-% bis 80 Gewichts-%, und besonders bevorzugt 30 Gewichts-% bis 75 Gewichts-% bezogen auf die Gesamtmasse des Formkörpers, in dieser enthalten ist. Alternativ dazu kann auch ein Gemisch beider Substanzen zum Einsatz gelangen.

Bei einem geringen Anteil der aufgeführten Flammschutzmittel kann der thermoplastischen Kunststoffmasse ein mineralischer Füllstoff oder ein anorganischer Zuschlag aus der Gruppe der Stoffe Bariumsulfat, Kalksteinmehl, Kreide und Calciumcarbonat beigefügt werden. Durch das Hinzufügen von anderen Mineralstoffen ergibt sich der Vorteil, dass diese Stoffe nicht brennen und als Füllstoffe wirken, die sich im Brandfalle neutral verhalten. Insbesondere können diese mineralischen Füllstoffe kostengünstiger als das anorganische Flammschutzmittel sein.

Des Weiteren oder alternativ dazu kann der thermoplastischen Kunststoffmasse beispielsweise 0,5 Gewichts-% Ruß beigegeben sein. Durch das Hinzufügen von Ruß zur Mischung aus thermoplastischem Kunststoff und anorganischem Flammschutzmittel lässt sich die UV-Stabilität des erfindungsgemäßen Materials steigern. Zusätzlich kann die Einfärbung durch andere Färbungsmittel beliebig gestaltet werden.

Der erfindungsgemäße brandhemmende Formkörper besteht dabei bevorzugt ausschließlich aus der thermoplastischen Kunststoffmasse sowie synthetischen Mineralölen, dem anorganischen Flammschutzmittel im zuvor genannten Mengenbereich und ggf. einem oder auch mehreren der zuletzt genannten Füllstoffe und/oder Ruß, die der aufgeschmolzenen thermoplastischen Kunststoffmasse ohne weitere chemische Zusätze und Bindemittel beigemischt werden. Wie sich dabei gezeigt hat, dient die thermoplastische Kunststoffmasse selbst in vorteilhafter Weise als ein Binder für das anorganische Flammschutzmittel und die anderen anorganischen Stoffe.

Mit dem erfindungsgemäßen brandhemmenden Formkörper lässt sich eine Brandschutzbarriere schaffen, die nach den bekannten einschlägigen Normen unbrennbar ist. Die Brandschutzbarriere verhindert brandübergreifende Ausbreitungen, und bei direkter Beflammung findet keine Feuerausbreitung und nahezu keine Wärmeausbreitung oder Weiterleitung statt. Der erfindungsgemäße Formkörper dient bevorzugt dem Schutz leicht entflammbarer Produkte. Insbesondere kann die Brandschutzbarriere als fertiges Produkt mit Brandschutzeigenschaften gemäß den Vorschriften der Automobilnorm, des europäischen Bauwesens und/oder den Brandschutzbestimmungen anderer nicht europäischer Länder hergestellt werden.

In vorteilhafter Weise kann mit der erfindungsgemäßen Brandschutzbarriere verhindert werden, dass Kunststoffe, Holz oder Aluminium entzündet werden und brennen. Des Weiteren kann die Hitzeausbreitung auf feste Stoffe, wie Mineralien, Kunststoffe, Holz oder Metall, verringert oder verzögert und damit aus Sicht des Brandschutzes verbessert werden.

Der erfindungsgemäße brandhemmende Formkörper kann, insbesondere als Flachstück, Folie, Rollenware, Plattenware mit anderen Produkten durch mechanisches Befestigen und/oder durch Verkleben verbunden werden. Die Handhabung und Verarbeitung sind dabei einfach und können durch einen Handwerker oder auch einen handwerklich Begabten bewerkstelligt werden, der den brandhemmenden Formkörper an den zu schützenden Produkten insbesondere verlegt, verklebt oder befestigt. Dazu können Klebstoffe wie Polyurethane, lösungsmittel-basierte oder wasser-basierte Klebstoffe oder Zweikomponentenklebstoffe verwendet werden. Alternativ ist es möglich, den brandhemmenden Formkörper als Strangpressprofil, als Rohr oder als Leitung für Wasser, Luft oder auch Kabel sowie als eine geschlossene Ummantelung für einen sonstigen zu schützenden Gegenstand zu extrudieren. In gleicher Weise kann der erfindungsgemäße brandhemmende Formkörper als Brandschutzvorhang, als Abdeckkörper oder als Trägerplatte verwendet oder eingesetzt werden. Insbesondere können die Ausführungen des brandhemmenden Formkörpers in entsprechender geometrischer Gestaltung, insbesondere hinsichtlich der Maße und der Formgebung, als Verkleidung für Stahlträger, als Verkleidung für Holzträger, als Verkleidungsfolie für Rohrleitungen, als Rohrleitung für Durchbrüche oder als Schutzrohr für Serviceleitungen verwendet werden.

Weiterhin ist es möglich durch Herstellungsverfahren wie Spritzgießen, Blasen oder Tiefziehen eigenständige brandhemmende Formkörper herzustellen.

Die Erfindung besitzt den Vorteil, dass bei der Beflammung des erfindungsgemäßen Formkörpers keine gesundheitsgefährdenden Fremdprodukte entstehen, wobei insbesondere auch der Formkörper selbst frei von krebserzeugenden Substanzen ist. Während verbreitete brandhemmende Substanzen im Entsorgungsfalle nicht als Hausmüll sondern als Sondermüll beseitigt werden müssen, ist der erfindungsgemäße Formkörper in vorteilhafter Weise als Hausmüll einzustufen. Reststücke des Formkörpers aus der Anwendung und Abfälle nach einem Brand können dementsprechend kostengünstig entsorgt werden.

Die Abgase bei der Beflammung enthalten keine oder nur sehr geringe Mengen von Spaltprodukten, so dass sie im Brandfalle keine gesundheitlichen Beeinträchtigungen hervorrufen. Zudem kommt es in überraschender Weise trotz des Kunststoffanteils im brandhemmenden Formkörpern auch nach längerer direkter Beflammung nicht zum Austritt von leicht entzündlichen und mitunter giftigen Gasen. Auch sind die bei einer direkten Beflammung entstehenden Rauchgase von sehr geringer Dichtigkeit und insbesondere frei von Chlor, Brom oder Schwermetallverbindungen.

Die Wärmeleitfähigkeit ist durch den stattfindenden Oxidationsprozess bei direkter Beflammung sehr gering, d.h. auf der der Flamme abgewandten Seite steigt die Temperatur nur gering an.

Die thermoplastische Kunststoffmasse der brandhemmenden Folie kann ein Material aus der Gruppe der Stoffe Polyethylen (PE), Ethylenvinylacetat (EVA), Ethylen-Propylen-Dien-Kautschuk (EPDM), Polypropylen (PP) und Polyamid (PA) sein. Die folgenden einzelnen Kunststoffe schmelzen ohne die erfindungsgemäße Mischung mit einem anorganischen Flammschutzmittel bei unterschiedlichen Temperaturen: Polyethylen bei 120 °C, EVA bei 180 °C, Polypropylen bei 230 °C und Polyamid bei 250 °C. Polyvinylchlorid (PVC) kann verwendet werden, allerdings ist zu berücksichtigen, dass bei dessen Verbrennung chlorhaltige Spaltprodukte entstehen, die gesundheitsschädlich sind. Der thermoplastische Kunststoff kann auch ein Copolymerisat sein. Die erfindungsgemäße Brandschutzbarriere weist einen der genannten thermoplastischen Kunststoffe oder andere thermoplastische Olefine auf, welche üblicherweise als Granulat eingesetzt werden. Des Weiteren enthält der erfindungsgemäße brandhemmende Formkörper synthetische Mineralöle. In vorteilhafter Weise werden durch das Hinzufügen von Füllstoffen mit einem hohen spezifischen Gewicht, wie z.B. Bariumsulfat, zu den gewünschten Kunststoffen erfindungsgemäße Formkörper erstellt, die zusätzlich zu ihren spezifischen mechanischen Eigenschaften, welche denen der eingesetzten Basiskunststoffe weitestgehend entsprechen, zusätzlich verbesserte schalldämmende oder schalldämpfende Eigenschaften erhalten.

Durch eine gezielte Auswahl des Kunststoffs für eine Ausführungsform des erfindungsgemäßen brandhemmenden Formkörpers werden Biegeweichheit, Steifigkeit und/oder Temperaturverhalten beeinflusst. Beispielsweise kann bei der Verwendung von Polypropylen ein im Vergleich zu anderen Kunststoffen steifer Formkörper, insbesondere eine Platte, erstellt werden. Dabei wird das Brennverhalten nicht negativ beeinträchtigt. Durch die Biegeweichheit der erfindungsgemäßen Brandschutzbarriere hat diese auch in vorteilhafter Weise luftschalldämmende und körperschalldämpfende Eigenschaften.

Die erfindungsgemäße Brandschutzbarriere hat als reine Folie einen Temperaturbereich, der je nach Wahl des Kunststoffes bis 250 Grad Celsius beträgt. Bei gleichem Flächengewicht hat die erfindungsgemäße Brandschutzbarriere analoge Schalldämmwerte wie herkömmliche Schwerfolien. Das spezifische Gewicht kann zwischen 1,2 und 4,5 kg/mm/m² liegen, das Flächengewicht zwischen 2 und 14 kg/m². Die Härte kann bis zu 93 Shore A je nach Ausführungsform betragen. Insbesondere ist eine Steinschlagfestigkeit ausrüstbar und/oder einstellbar. Je nach Formulierung in einer konkreten Ausführungsform kann die Dehnung 50 bis 800 % betragen. Die Dehnungs-Zugfestigkeit verhält sich gegenläufig. Die Kältefestigkeit kann -40 Grad Celsius betragen. Die vom verwendeten Kunststoff abhängige Wärmefestigkeit kann bis zu 250 Grad Celsius betragen. Die erfindungsgemäße Brandschutzbarriere kann tiefziehfähig sein.

In vorteilhaften Ausführungsformen kann der brandhemmende Formkörper eine Armierung in Form eines Vlieses, eines Gewebes oder eines Geleges aus einem metallischen oder mineralischen Werkstoff, aus Glasfasern, aus Kunststoff oder aus Holz und/oder einen Träger aus Stahl, Aluminium, Kunststoff, Holz oder einem mineralischen Werkstoff aufweisen. In vorteilhafter Weise können durch die Armierung höhere Temperaturanforderungen als 250 Grad Celsius erfüllt werden.

Im Zusammenhang mit der Erfindung steht auch ein Verfahren zur Herstellung eines brandhemmenden Formkörpers. Gemäß dem erfindungsgemäßen Verfahren wird ein thermoplastisches Kunststoffmaterial, insbesondere in Form eines Granulats, aufgeschmolzenen und mit Aluminiumhydroxid oder mit Magnesiumhydroxid sowie synthetischen Mineralölen gemischt. Die Verarbeitungstemperatur liegt dabei im Falle von Aluminiumhydroxid unterhalb von 350 Grad Celsius, und im Falle von Magnesiumhydroxid unterhalb von 500 Grad Celsius, wobei die Mindesttemperatur durch die Schmelztemperatur des jeweils eingesetzten thermoplastischen Kunststoffmaterials gewählt wird und bevorzugt im Bereich zwischen ca. 120 °C und 220 °C liegt. Nach dem Vermischen des bevorzugt pulverförmigen Aluminiumhydroxids und/oder Magnesiumhydroxids mit dem aufgeschmolzenen thermoplastischen Kunststoffmaterial sowie synthetischen Mineralölen wird die noch heiße Kunststoffmasse durch eine geeignete Düse in eine gewünschte Form gebracht. Aus dieser Masse kann ein Formkörper insbesondere extrudiert, kalandriert oder gespritzt werden.

In gleicher Weise ist es ebenfalls möglich, die durch Mischen erhaltene brandhemmende Masse nach dem Mischvorgang abzukühlen und ggf. zu einem Granulat zu zerkleinern. Dieses Granulat kann anschließend wiederum aufgeschmolzen werden. Aus der aufgeschmolzenen Masse kann anschließend der gewünschte Formkörper extrudiert, kalandriert oder gespritzt werden. Der Anteil des als Flammschutzmittel wirkenden Magnesiumhydroxids und/oder Aluminiumhydroxids liegt dabei im Intervall von 20 Gewichts-% bis 80 Gewichts-%, und besonders bevorzugt im Intervall zwischen 30 Gewichts-% und 75 Gewichts-%, jeweils bezogen auf das Gesamtgewicht der durch Mischen erhaltenen Masse.

Mit einem Mischextruder kann ein fertiges Produkt hergestellt werden. Bei Mischern-Knetern-Einschneckenextrudern ein Granulat bzw. mit Extrudern und Kalandern aus dem Granulat ein Fertigprodukt.

In konkreter Ausführung des erfindungsgemäßen Verfahrens ist das anorganische Flammschutzmittel entweder Aluminiumhydroxid, wobei bei der Herstellung des Formstücks, insbesondere der Folie, eine Temperatur unterhalb von 350 Grad Celsius eingehalten wird, oder Magnesiumhydroxid, wobei bei der Herstellung des Formstücks, insbesondere der Folie, eine Temperatur unterhalb von 500 Grad Celsius eingehalten wird.

In einer vorteilhaften Realisierung des erfindungsgemäßen Verfahrens zur Herstellung eines brandhemmenden Formkörpers wird beim Ausbringen der Masse zu einem Formkörper, insbesondere einem flächigen Produkt, die Masse im heißen Zustand in einem Arbeitsschritt mit einer oder mehreren Schichten eines von der Masse verschiedenen Materials laminiert. Die Laminierung kann bei erhöhter Temperatur erfolgen (Heißlaminierung).

Ebenso kann die durch Mischung erhaltene brandhemmende Masse sozusagen als Schutzlage auf wenigstens eine Fläche eines weiteren Formkörpers aufgebracht werden, der selbst nicht zwangsläufig auch aus einem brandhemmenden Werkstoff bestehen muss.

Die erfindungsgemäße Brandschutzbarriere kann in einem ununterbrochenen Herstellungsvorgang oder in mehreren Schritten als Granulat oder Fertigprodukt auf Extrudern, zum Beispiel einem Einschneckenextruder oder einem Doppelschneckenextruder, oder Kalandern als Einschichtprodukt oder Mehrschichtprodukt, insbesondere als Laminat mit einer oder mehrerer Schichten aus anderen Materialien, hergestellt werden. Das Material der erfindungsgemäßen Brandschutzbarriere kann - wie zuvor bereits erwähnt - ebenso als ein Granulat in einem Spritzgussverfahren und Blasverfahren eingesetzt werden. Bei der Herstellung als Mehrschichtprodukt werden die Laminierungen bevorzugt ohne zusätzliche Verbindungsprodukte vorgenommen. Zusätzliche Ausrüstungen der erfindungsgemäßen Brandschutzbarriere können auf die Oberfläche aufgebrachte Materialien wie Polyvinylchlorid (PVC), thermoplastische Elastomere auf Olefinbasis (TPO), Aluminium, Stahl, Metalle, insbesondere in Form von Vliesen, Folien oder Geweben, sein. Durch eine Oberflächenausrüstung kann der erfindungsgemäße brandhemmende Formkörper gegen Öle, Fette, Diesel oder Benzine beständig gemacht werden. Alternativ dazu kann eine farbige, gemusterte oder anderweitig optisch gestaltete Schicht, zum Beispiel eine Folie, aufgebracht sein. Auf der anderen Seite der erfindungsgemäßen Brandschutzbarriere kann eine Armierung vorgesehen sein. Diese kann aus Fasern, Gelegen, einem Vlies oder einem Schaum, insbesondere aus einem Metall als Folie, Gelege oder Gewebe bestehen. Die erfindungsgemäße Brandschutzbarriere ist einlaminierbar in Polyurethan (PU) oder in Glasfaser verstärkten Kunststoff (GfK) oder Kohlefaser verstärkten Kunststoff (CfK).

Der erfindungsgemäße brandhemmende Formkörper kann in einer Reihe von Anwendungen zum Einsatz gelangen, insbesondere für einen Brandschutz mit vorteilhaften akustischen Eigenschaften und bei negativer Wärmeleitung. Eine vorteilhafte Verwendung eines brandhemmenden Formkörpers mit einem oder mehreren Merkmalen gemäß dieser Darstellung erfolgt in Landfahrzeugen, Wasserfahrzeugen, Luftfahrzeugen, Gebäuden, an oder in Möbeln, in Motorräumen, als Plane zur Abdeckung von Gegenständen oder zur Verkleidung oder zur Ummantelung von Treppen, Decken, Wänden, Dächern oder Böden.

Konkret ist die erfindungsgemäße Brandschutzbarriere besonders geeignet für Anwendungen im Bauwesen, insbesondere in Bezug auf den Innenausbau (zum Bespiel Hausbau oder Dachausbau), für Möbel, für Schienenfahrzeuge, für PKW, für LKW, für Busse, im Maschinenbau, im Schiffsbau, für Nutzfahrzeuge, für Militärfahrzeuge, für Flugzeuge, für Motorräume, für Trennwände. Als Aufnahmeuntergrund können zu schützende Gegenstände aus Holz, Kunststoff, mineralischen Stoffen oder auch aus Metall etc. dienen. Die erfindungsgemäße Brandschutzbarriere kann auch als Plane zur Abdeckung von Gegenständen, Fahrzeugen, Gebäuden und Gebäudeteilen eingesetzt werden, wobei durch mechanisches oder thermoplastisches Verbinden einzelner erfindungsgemäßer brandhemmender Folien auch großflächige Teile entstehen können.

Eine weitere besondere Anwendung ist die Ummantelung von Batterien oder Akkumulatoren. Dabei kommen die besonderen Eigenschaften des erfindungsgemäßen brandhemmenden Formkörpers bei offener Flamme und/oder deren Körperschalldämpfung und/oder Luftschalldämmung zur Geltung.

Besonders bedeutsam ist die Anwendung der extrudierten brandhemmenden Rohre oder brandhemmenden Leitungen für Rohrleitungen, beispielsweise Abwasserrohre oder Lüftungsrohre, Versorgungsleitungen oder Anschlussleitungen. Zusätzlich benötigte Formkörper oder Verbindungsteile können im Spritzgussverfahren, Blasverfahren oder Tiefziehverfahren hergestellt werden. Hinsichtlich der Anwendung in Form einer brandhemmenden Beschichtung oder als brandhemmender aufgebrachter Körper oder Fläche auf einem Träger ist festzuhalten, dass der Träger von seiner brandschutzspezifischen Einstufung her ein leicht entflammbares Produkt sein kann. In vorteilhafter Weise erreicht der Verbundkörper, beziehungsweise der beschichtete Körper, eine A2 Klassifikation. Typische Träger können dabei Stahl, Aluminium, Holzträger oder Balken und Streben, Lüftungsleitungen, Wasserleitungen, Serviceleitungen oder Versorgungsleitungen sein.

Weitere Vorteile und vorteilhafte Weiterbildungen der Erfindung werden anhand der nachfolgenden Beschreibung einer beispielhaften Ausführungsform in Form einer brandhemmenden Folie, auch als Brandschutzfolie bezeichnet, dargestellt:
In einer vorteilhaften Ausführungsform des erfindungsgemäßen Verfahrens zur Erzeugung des brandhemmenden Formkörpers, konkret einer Brandschutzfolie, wird ein thermoplastisches Kunststoffmaterial, beispielsweise in Form eines Granulats, aufgeschmolzen. In einer Mischschnecke wird eine Menge zwischen 10 und 90 Gewichts-% Aluminiumhydroxid oder Magnesiumhydroxid zugeführt. Die Zuführung erfolgt über in der Kunststoffverarbeitung bekannte Sidefeeder, die nacheinander bevorzugt auch noch ein weiteres Material, insbesondere einen Füllstoff zuführen können. Ebenso kann das Vermischen der Kunststoffschmelze mit dem Flammschutzmittel auch in einem bekannten Rührwerk oder einem Kneter erfolgen.

Bevorzugt sind mindestens 20 Gewichts-% Kunststoffanteil vorhanden. Allgemein ist des Weiteren bevorzugt, dass der Aluminiumhydroxid-Anteil beziehungsweise Magnesiumhydroxid-Anteil möglichst hoch liegt, wobei aber aus kaufmännischer Sicht zu berücksichtigen ist, dass sich das Produkt dementsprechend verteuert. Hinsichtlich der Auswahl des anorganischen Flammschutzmittels ist - trotz des höheren Preises - aus technischer Sicht Magnesiumhydroxid bevorzugt, obwohl es teurer als Aluminiumhydroxid ist.

Insbesondere um die hohen Kosten von Aluminiumhydroxid sowie die noch höheren Kosten von Magnesiumhydroxid entsprechend zu mindern, wird ein weiterer oder auch mehrere weitere Füllstoffe, die insbesondere Gewichtsanteile des anorganischen Flammschutzmittels ersetzen, insbesondere Calciumcarbonat oder auch Bariumsulfat, beigefügt, welch letzteres der Brandschutzfolie entsprechende vorteilhafte akustische Dämmeigenschaften verleiht, da sich unter anderem das spezifische Gewicht durch die Beifügung des Füllstoffs erhöht. Bei einer konkreten versuchsweisen Ausführungsform wurden 76,2 % Aluminiumhydroxid einer aufgeschmolzenen Mischung aus etwa 7,8 % EVA, 6 % EPDM und etwa 6 % ENGAGE (Polyolefin Elastomere, Markenbezeichnung der Firma Dow Chemical Company), sowie 4 % synthetischen Öls in Form von Pulver zugemischt (alle Angaben in Gewichtsprozenten).

Nach dem Vermischen von Kunststoff und Flammschutzmittel wird diese Mischung ausgebracht, so dass ein Flachkörper, insbesondere eine Folie geformt wird. Die Ausbringung erfolgt über eine Breitschlitzdüse oder alternativ dazu durch einen Extruder. Optional kann des Weiteren ein entsprechender Kalander zum Einsatz gelangen. Auf diese Weise ist ein Flachstück oder flächiges Produkt in Form einer Folie mit einer Stärke von z.B. 1 mm bis 10 mm oder auch mehr erhältlich, wobei die Mindeststärke der Folie, d.h. des Formkörpers, bei der dieser seine überraschenden brandhemmenden Eigenschaften effektiv entfaltet, bei ca. 0,5 mm liegt.

Wie bereits erwähnt, ist dieses flächige Produkt je nach Eigenschaft der eingesetzten Kunststoffe hochgradig flexibel, kann jedoch auch, insbesondere anwendungsbezogen, durch eine entsprechende Armierung in Form von einem Stahlgewebe oder auch einem Glasfasergewebe oder einem anderen Armierungsmaterial mit entsprechenden mechanischen Eigenschaften versehen werden.

Das nach dem zuvor genannten erfindungsgemäßen Verfahren hergestellte flächige Produkt mit einer Dicke von 4 mm kann der offenen Flamme eines Bunsenbrenners mit etwa 1.700 °C Flammtemperatur für etwa 30 Minuten standhalten, wobei die Schichten nacheinander sukzessiv abbrennen und hierdurch ein Löscheffekt der Flamme auftritt. Ein besonderer Vorteil des erfindungsgemäß erhältlichen Materials besteht darin, dass keine Ausbreitung der Flamme erfolgt, da diese durch den austretenden Wasserdampf umgehend gelöscht wird, beziehungsweise der von der Flamme benötigte Sauerstoff entzogen wird. Der Löscheffekt durch das Aluminiumhydroxid oder Magnesiumhydroxid tritt an der Oberfläche des Materials in dem Bereich auf, in welchem die Flammen auf das Material einwirken. Dabei wurde beobachtet, dass die Wirkungszeit, in der der Brandschutz erhalten wird, um so kürzer ist, je weniger Aluminiumhydroxid oder Magnesiumhydroxid im Material enthalten ist.

Obgleich Aluminium als solches bereits bei ca. 650 Grad Celsius schmilzt, tritt der überraschende Flammen hemmende Effekt bei dem erfindungsgemäßen Werkstoff aufgrund der vorteilhaften Eigenschaften des dem geschmolzenen thermoplastischen Kunststoffmaterial hinzugefügten Aluminiumhydroxids in Verbindung mit allen bekannten thermoplastischen Kunststoffen auf.

Um bei der Herstellung des erfindungsgemäßen Werkstoffs die Abspaltung von Wasser aus dem zugesetzten Aluminiumhydroxid oder Magnesiumhydroxid so weit wie möglich zu reduzieren, erfolgt das Hinzufügen des vorzugsweise pulverförmigen Aluminiumhydroxids bei einer Temperatur unterhalb von etwa 350 Grad Celsius, bevorzugt geringer als 250 Grad Celsius, und das Hinzufügen des vorzugsweise ebenfalls pulverförmigen Magnesiumhydroxids bei einer Temperatur von weniger als 500 Grad Celsius, bevorzugt weniger als 250 Grad Celsius. Das pulverförmige Aluminiumhydroxid, bzw. Magnesiumhydroxid wird hierbei der flüssigen Kunststoffschmelze in den zuvor erwähnten Mengen direkt zugemischt, welche je nach Art des eingesetzten Kunststoffes im Bereich zwischen 180 Grad Celsius und 350 Grad Celsius liegt. Auf diese Weise wird erreicht, dass nach dem Herstellungsprozess ein möglichst großer Anteil an unzersetztem Aluminiumhydroxid, bzw. Magnesiumhydroxid im fertigen Endprodukt, insbesondere in der Brandschutzfolie, enthalten ist.

Die Korngröße des anorganischen Flammschutzmittels, insbesondere die durchschnittliche Korngröße, liegt im Intervall von 0,01 mm bis 0,4 mm. Der Korndurchmesser des anorganischen Flammschutzmittels beeinflusst in bedeutender Weise die Elastizitätseigenschaften des erfindungsgemäßen Formkörpers. Vom Anmelder konnte beobachtet werden, dass bei großen Korndurchmessern eine hohe Reißfestigkeit und eine geringe Dehnung und bei kleinen Korndurchmessern eine hohe Dehnung und eine geringe Reißfestigkeit des Endprodukts erhalten wird.

## Patentansprüche

1. Brandhemmender Formkörper, welcher eine thermoplastische Kunststoffmasse sowie synthetische Mineralöle und ein mit der thermoplastischen Kunststoffmasse vermischtes anorganisches Flammschutzmittel enthält, wobei das Flammschutzmittel Aluminiumhydroxid oder Magnesiumhydroxid mit einem Anteil im Intervall von 20 Gewichts-% bis 80 Gewichts-%, bevorzugt 30 Gewichts-% bis 75 Gewichts-%, bezogen auf die Gesamtmasse des Formkörpers, ist,
**dadurch gekennzeichnet,**
**dass** die thermoplastische Kunststoffmasse ein Gemisch aus zwei oder mehreren der Stoffe ABS, Polyethylen, Ethylenvinylacetat, Ethylen-Propylen-Dien-Kautschuk, Polypropylen, Polyvinylchlorid und Polyamid ist und dass die durchschnittlichen Korngrößen des anorganischen Flammschutzmittels im Intervall von 0,01 bis 0,4 mm liegen.

2. Brandhemmender Formkörper gemäß Anspruch 1,
**dadurch gekennzeichnet,**
**dass** die thermoplastische Kunststoffmasse einen mineralischen Füllstoff aus der Gruppe der Stoffe Bariumsulfat, Kalksteinmehl, Kreide und Calciumcarbonat und/oder 0,5 Gewichts-% Ruß enthält.

3. Brandhemmender Formkörper gemäß Anspruch 1 oder 2,
**dadurch gekennzeichnet,**
**dass** dieser ausschließlich die thermoplastische Kunststoffmasse sowie synthetische Mineralöle, das anorganische Flammschutzmittel und optional einen anorganischen Füllstoff enthält.

4. Brandhemmender Formkörper gemäß einem der vorstehenden Ansprüche,
**gekennzeichnet durch**
eine Armierung in Form eines Vlieses, eines Gewebes oder eines Geleges aus einem metallischen oder mineralischen Werkstoff, aus Glasfasern, aus Kunststoff oder aus Holz und/oder einen Träger aus Stahl, Aluminium, Kunststoff, Holz oder einem mineralischen Werkstoff.

5. Verfahren zur Herstellung eines brandhemmenden Formkörpers nach einem der Ansprüche 1 bis 4,
**gekennzeichnet durch** die folgenden Verfahrensschritte:
Mischen eines geschmolzenen thermoplastischen Kunststoffmaterials umfassend ein Gemisch aus zwei oder mehreren der Stoffe ABS, Polyethylen, Ethylenvinylacetat, Ethylen-Propylen-Dien-Kautschuk, Polypropylen, Polyvinylchlorid und Polyamid sowie synthetische Mineralöle mit Aluminiumhydroxid bei einer Temperatur unterhalb von 350 °C und/oder mit Magnesiumhydroxid bei einer Temperatur unterhalb von 500 °C, wobei der Anteil an Aluminiumhydroxyd und/oder Magnesiumhydroxyd im Intervall von 20 Gewichts-% bis 80 Gewichts-%, bevorzugt 30 Gewichts-% bis 75 Gewichts-% liegt, und wobei die Korngrößen des Aluminiumhydroxids oder des Magnesiumhydroxids im Intervall von 0,01 mm bis 0,4 mm liegen, und Ausbringen der durch Mischung erhaltenen Masse als Formkörper.

6. Verfahren nach Anspruch 5,
**dadurch gekennzeichnet,**
**dass** beim Ausbringen der Masse als Formkörper diese Masse in einem Arbeitsschritt mit einer oder mehreren Schichten eines von der Masse verschiedenen Materials laminiert wird.

7. Verfahren nach Anspruch 5,
**dadurch gekennzeichnet, dass**
die durch Mischung erhaltenen Masse nach dem Ausbringen zu Granulat geformt wird.

8. Verfahren nach Anspruch 7,
**dadurch gekennzeichnet, dass**
das Granulat aufgeschmolzen und insbesondere durch Einspritzen des aufgeschmolzenen Granulats in eine Form zu einem Formkörper geformt wird.

9. Verfahren nach einem der Ansprüche 5 bis 8
**dadurch gekennzeichnet,**
**dass** der brandhemmende Formkörper als Rohr oder als Leitung (für Wasser, Luft oder Kabel) extrudiert wird.

10. Verfahren nach einem der Ansprüche 5 bis 9,
**dadurch gekennzeichnet,**
**dass** die durch Mischung erhaltene Masse auf wenigstens eine Fläche eines weiteren Formkörpers aufgebracht wird.

11. Verfahren nach einem der Ansprüche 5 bis 10,
**dadurch gekennzeichnet,**
**dass** das Aluminiumhydroxid oder das Magnesiumhydroxid dem Kunststoffmaterial in einem Rührwerk oder einem Kneter oder einer Mischschnecke, insbesondere über einen Sidefeeder, zugeführt wird.

12. Verwendung eines brandhemmenden Formkörpers gemäß einem der Ansprüche 1 bis 4 in Landfahrzeugen, Wasserfahrzeugen, Luftfahrzeugen, Gebäuden, an oder in Möbeln, in Motorräumen, als Plane zur Abdeckung von Gegenständen, Gebäuden oder Gebäudeteilen oder zur Verkleidung von Treppen, Decken, Wänden, Dächern oder Böden, als Brandschutzvorhang, als Verkleidung für einen Gegenstand, als Rohr, als Leitung, als Abdeckkörper oder als Trägerplatte.

## Claims

1. A fire-retardant moulding which contains a thermoplastic substance and also synthetic mineral oils and an inorganic flameproofing agent mixed with the thermoplastic substance, wherein the flameproofing agent is aluminium hydroxide or magnesium hydroxide with a proportion in the range from 20% by weight to 80% by weight, preferably 30% by weight to 75% by weight, relative to the total mass of the moulding,
**characterised in that**
the thermoplastic substance is a mixture of two or more of the substances ABS, polyethylene, ethylene-vinyl acetate, ethylene propylene diene monomer rubber, polypropylene, polyvinyl chloride and polyamide, and **in that** the average grain sizes of the inorganic flameproofing agent lie in the range from 0.01 to 0.4 mm.

2. A fire-retardant moulding according to Claim 1,
**characterised in that**
the thermoplastic substance contains a mineral filler from the group of the substances barium sulphate, powdered limestone, chalk and calcium carbonate and/or 0.5% by weight soot.

3. A fire-retardant moulding according to Claim 1 or 2,
**characterised in that**
it contains exclusively the thermoplastic substance and also synthetic mineral oils, the inorganic flameproofing agent and optionally an inorganic filler.

4. A fire-retardant moulding according to one of the preceding claims,
**characterised by**
a reinforcement in the form of a non-woven fabric, a woven fabric or a scrim made of a metallic or mineral material, of glass fibres, of plastics material or of wood, and/or a support made of steel, aluminium, plastics material, wood or a mineral material.

5. A method for producing a fire-retardant moulding according to one of Claims 1 to 4,
**characterised by** the following method steps:
mixing a molten thermoplastic plastics material comprising a mixture of two or more of the substances ABS, polyethylene, ethylene-vinyl acetate, ethylene propylene diene monomer rubber, polypropylene, polyvinyl chloride and polyamide and also synthetic mineral oils with aluminium hydroxide at a temperature below 350°C and/or with magnesium hydroxide at a temperature below 500°C, the proportion of aluminium hydroxide and/or magnesium hydroxide being in the range from 20% by weight to 80% by weight, preferably 30% by weight to 75% by weight, and the grain sizes of the aluminium hydroxide or of the magnesium hydroxide being in the range from 0.01 mm to 0.4 mm, and discharging the substance obtained by mixing as a moulding.

6. A method according to Claim 5,
**characterised in that**
upon the substance being discharged as a moulding this substance in an operating step is laminated with one or more layers of a material different from the substance.

7. A method according to Claim 5,
**characterised in that**
the substance obtained by mixing is formed into granules after being discharged.

8. A method according to Claim 7,
**characterised in that**
the granules are melted and formed into a moulding in particular by injecting the molten granules into a mould.

9. A method according to one of Claims 5 to 8,
**characterised in that**
the fire-retardant moulding is extruded as a pipe or as a line (for water, air or cables).

10. A method according to one of Claims 5 to 9,
**characterised in that**
the substance obtained by mixing is applied to at least one surface of a further moulding.

11. A method according to one of Claims 5 to 10,
**characterised in that**
the aluminium hydroxide or the magnesium hydroxide is supplied to the plastics material in a stirrer or a kneader or a mixing screw, in particular by way of a sidefeeder.

12. Use of a fire-retardant moulding according to one of Claims 1 to 4 in land vehicles, water craft, aircraft, buildings, on or in furniture, in engine compartments, as a tarpaulin for covering objects, buildings or parts of buildings or for cladding stairs, ceilings, walls, roofs or floors, as a fire-protection curtain, as cladding for an object, as a pipe, as a line, as a covering element or as a supporting plate.

## Revendications

1. Corps façonné ignifuge, qui contient une matière synthétique thermoplastique ainsi que des huiles minérales synthétiques et un agent inorganique de protection contre les flammes mélangé à la matière synthétique thermoplastique, dans lequel l'agent de protection contre les flammes est de l'hydroxyde d'aluminium ou de l'hydroxyde de magnésium comprenant une fraction dans l'intervalle de 20 % en poids à 80 % en poids, de préférence de 30 % en poids à 75 % en poids, rapportés à la masse totale du corps façonné, **caractérisé en ce que** la matière synthétique thermoplastique est un mélange de deux substances ou plus choisies parmi de l'ABS, du polyéthylène, de l'éthylène-acétate de vinyle, du caoutchouc d'éthylène-propylène-diène, du polypropylène, du chlorure de polyvinyle et du polyamide, et **en ce que** les granulométries moyennes de l'agent inorganique de protection contre les flammes se situent dans l'intervalle de 0,01 à 0,4 mm.

2. Corps façonné ignifuge selon la revendication 1, **caractérisé en ce que** la matière synthétique thermoplastique contient une matière de charge minérale choisie parmi le groupe des substances que sont le sulfate de baryum, le calcaire en poudre, la craie et le carbonate de calcium et/ou 0,5 % en poids de noir de fumée.

3. Corps façonné ignifuge selon la revendication 1 ou 2, **caractérisé en ce que** le corps en question contient à titre exclusif la matière synthétique thermoplastique ainsi que des huiles minérales synthétiques, l'agent inorganique de protection contre les flammes et, de manière facultative, une matière de charge inorganique.

4. Corps façonné ignifuge selon l'une quelconque des revendications précédentes, **caractérisé par** une armature sous la forme d'un non-tissé, d'un tissu ou d'un canevas réalisé à partir d'un matériau métallique ou minéral, à partir de fibres de verre, à partir d'une matière synthétique ou à partir de bois et/ou un support en acier, en aluminium, en une matière synthétique, en bois ou en un matériau minéral.

5. Procédé pour la fabrication d'un corps façonné ignifuge selon l'une quelconque des revendications 1 à 4, **caractérisé par** les étapes opératoires suivantes dans lesquelles :
on mélange une matière synthétique thermoplastique en fusion comprenant un mélange de deux substances ou plus choisies parmi de l'ABS, du polyéthylène, de l'éthylène-acétate de vinyle, du caoutchouc d'éthylène-propylène-diène, du polypropylène, du chlorure de polyvinyle et du polyamide, ainsi que des huiles minérales synthétiques, avec de l'hydroxyde d'aluminium à une température inférieure à 350 °C et/ou avec de l'hydroxyde de magnésium à une température inférieure à 500 °C ; dans lequel la fraction de l'hydroxyde d'aluminium et/ou de l'hydroxyde de magnésium se situe dans l'intervalle de 20 % en poids à 80 % en poids, de préférence de 30 % en poids à 75 % en poids, et dans lequel les granulométries de l'hydroxyde d'aluminium ou de l'hydroxyde de magnésium se situent dans l'intervalle de 0,01 mm à 0,4 mm ; et on décharge la matière obtenue par mélange sous la forme de corps façonnés.

6. Procédé selon la revendication 5, **caractérisé en ce que**, lors de la décharge de la matière sous la forme de corps façonnés, on soumet cette matière, dans une étape opératoire, à une stratification avec une ou plusieurs couches d'un matériau différent de la matière en question.

7. Procédé selon la revendication 5, **caractérisé en ce qu'**on transforme la matière obtenue par mélange, après la décharge, pour obtenir un produit de granulation.

8. Procédé selon la revendication 7, **caractérisé en ce qu'**on met en fusion le produit de granulation et, en particulier, on le transforme, via une introduction par injection dans un moule du produit de granulation à l'état fondu, pour obtenir un corps façonné.

9. Procédé selon l'une quelconque des revendications 5 à 8, **caractérisé en ce qu'**on soumet le corps façonné ignifuge à une extrusion pour obtenir un tube ou pour obtenir un conduit (pour l'eau, l'air ou un câble).

10. Procédé selon l'une quelconque des revendications 5 à 9, **caractérisé en ce qu'**on applique la matière obtenue par mélange sur au moins une surface d'un corps façonné supplémentaire.

11. Procédé selon l'une quelconque des revendications 5 à 10, **caractérisé en ce qu'**on achemine l'hydroxyde d'aluminium ou l'hydroxyde de magnésium à la matière synthétique dans un agitateur ou un malaxeur ou une vis mélangeuse, en particulier via un dispositif d'alimentation latéral.

12. Utilisation d'un corps façonné ignifuge selon l'une quelconque des revendications 1 à 4, dans des véhicules agricoles, des véhicules aquatiques, des véhicules aériens, des immeubles, contre ou dans des meubles, dans des compartiments moteurs, sous la forme de bâches pour le recouvrement d'objets, d'immeubles ou de parties d'immeubles, ou pour le revêtement d'escaliers, de plafonds, de murs, de toits ou de sols, sous la forme d'une tenture de protection contre le feu, sous la forme d'un revêtement pour un objet, sous la forme d'un tube, sous la forme d'un conduit, sous la forme de corps de recouvrement ou sous la forme d'une plaque de support.
